# FASCICULE DE BREVET EUROPEEN

(11) **EP 1 264 162 B1**
(45) Date de publication et mention de la délivrance du brevet: **08.02.2012**
(21) Numéro de dépôt: 01913989.8
(22) Date de dépôt: 13.03.2001
(51) Int. Cl.: G01F 15/14

(54) **CORPS DE COMPTEUR DE LIQUIDE EN PLASTIQUE**
KUNSTSTOFFFORMKÖRPER FÜR EINEN DURCHFLUSSMESSER
PLASTIC LIQUID METER BODY

(30) Priorité: 15.03.2000 FR 0003349
(43) Date de publication de la demande: 11.12.2002
(73) Titulaire: Actaris S.A.S., 92100 Boulogne-Billancourt (FR)
(72) Inventeur: HENNEBELLE, Barbara, F-62136 La Couture (FR)
(74) Mandataire: Feray, Valérie
(86) Numéro de dépôt international: PCT/FR2001/000733
(87) Numéro de publication internationale: WO 2001/069187

(56) Documents cités:
- DE-A- 2 400 408
- DE-C- 19 838 320
- US-A- 4 391 139

## Description

La présente invention a pour objet un corps de compteur de liquide, notamment d'eau, en plastique.

De façon plus précise la présente invention concerne un corps de compteur de liquide qui trouve son application de façon indifférente pour deux grands types de compteurs de fluide bien connus de l'homme du métier, à savoir les compteurs volumétriques tels que les compteurs de liquide à piston oscillant, à diaphragme ou à disque en nutation, et les compteurs de vitesse tels que les compteurs de liquide à turbine (à jet unique ou à jet multiple), ou à hélice.

Dans le domaine des compteurs d'eau, le corps de compteur est fabriqué depuis de nombreuses années dans un alliage métallique tel que le laiton. Ce matériau offre une bonne tenue au vieillissement, en particulier au cours du temps les performances métrologiques du compteur, et son étanchéité sont maintenues.

Depuis de nombreuses années, les fabricants de compteur d'eau ont cherché à remplacer le laiton par du plastique. Le corps de compteur d'eau en plastique apporte de nombreux avantages, tels que la possibilité de modifier le design du corps de compteur avec intégration de nouvelles fonctions, changement de la couleur bien plus importante qu'avec le laiton, un gain de poids notable, un gain de coût de fabrication, une diminution du bruit généré par le compteur en fonctionnement, et enfin l'élimination des problèmes liés à la pollution de l'eau potable en contact avec le laiton. Néanmoins, un problème majeur subsiste avec les corps de compteur d'eau en plastique car ils n'offrent pas une bonne performance mécanique qui conduit en particulier à des problèmes de tenue au pression de fluide élevé et au vieillissement. A titre d'exemple, on constate sur une durée bien inférieure à la durée de vie normale attendue pour un compteur d'eau, l'apparition de fissures conduisant à des fuites.

Le document US 4 391 139 décrit un corps de compteur de liquide comportant une bâche en plastique laquelle comprend une partie inférieure limitée par un fond et une paroi latérale inférieure, et une partie supérieure de forme cylindrique limitée par une paroi latérale supérieure, ladite paroi latérale supérieure se raccordant à la paroi latérale inférieure par un épaulement, la partie inférieure définissant un logement pour une chambre de mesure. Le fond de la bâche a une forme arrondie, semi-elliptique.

Le document DE 24 00 408 décrit un corps de compteur de liquide comportant une bâche, dont le fond a également une forme arrondie, semi-elliptique.

La présente invention a pour objectif de pallier aux inconvénients précités en proposant un corps de compteur de liquide présentant des performances mécaniques améliorées. Le corps de compteur selon l'invention comporte une bâche en plastique présentant une symétrie de révolution autour d'un axe central de symétrie, la bâche comprenant une partie inférieure limitée par un fond et une paroi latérale inférieure, et une partie supérieure de forme cylindrique limitée par une paroi latérale supérieure, ladite paroi latérale supérieure se raccordant à la paroi latérale inférieure par un épaulement, la partie inférieure définissant une chambre de mesure, ledit corps de compteur comprend en outre des tubulures d'entrée et de sortie comportant un filetage externe, chacune desdites tubulures débouchant dans la chambre de mesure par un alésage ménagé dans la paroi latérale inférieure en formant un injecteur et un éjecteur respectivement, ledit corps de compteur est caractérisé en ce que le fond a une forme intérieure elliptique, concave en coupe selon un plan contenant l'axe central de symétrie (ZZ') de la bâche.

Un tel type de corps de compteur d'eau permet de diminuer de façon notable les concentrations de contraintes. Ceci empêche que des fissures apparaissent au fil du temps dans le corps du compteur, évitant par la même les fuites.

Selon une variante de réalisation, au moins un des alésages formant l'injecteur et l'éjecteur a une forme elliptique.

Selon une autre variante de réalisation, chaque tubulure présente une forme extérieure cylindrique, et au moins une des tubulures présente une forme intérieure elliptique.

Un tel type de tubulure permet de déplacer les concentrations de contrainte hors des zones fragiles de la pièce, notamment en dehors des lignes de soudure existant entre les tubulures et la partie inférieure de la bâche. A nouveau, le risque d'apparition de fissure est considérablement réduit au niveau de la jonction entre les tubulures et la partie inférieure de la bâche.

Un compteur d'eau équipé d'un corps de compteur en plastique ayant ces caractéristiques présente un seuil critique de résistance mécanique bien plus élevé que les corps de compteur en plastique de l'art antérieur et permet de diminuer le niveau de contrainte mécanique pour une pression de liquide donnée. Par ailleurs, on constate pour un tel corps de compteur, une durée de vie bien supérieure aux corps de compteur en plastique connu. Il faut également noter que la forme particulière du corps de compteur, de l'alésage et des tubulures n'a pas d'influence notable sur l'écoulement du fluide dans le corps de compteur et n'influence en rien la qualité des mesures de débit.

D'autres avantages et caractéristiques de l'invention ressortiront à la lecture de la description suivante faite à titre d'exemple et en référence aux dessins annexés dans lesquels :
- la figure 1 est une vue de côté d'un corps de compteur volumétrique selon l'invention;
- la figure 2 est une vue de face d'un corps de compteur volumétrique selon l'invention;
- la figure 3 est une vue de dessous du corps de compteur de la figure 1; et
- la figure 4 est une vue en coupe verticale du corps de compteur selon la ligne I-I de la figure 3.

La description qui va suivre est faite en relation avec un corps de compteur du type volumétrique. Néanmoins, l'homme de l'art pourra aisément appliquer ce corps de compteur aux autres types de compteurs mentionnés précédemment.

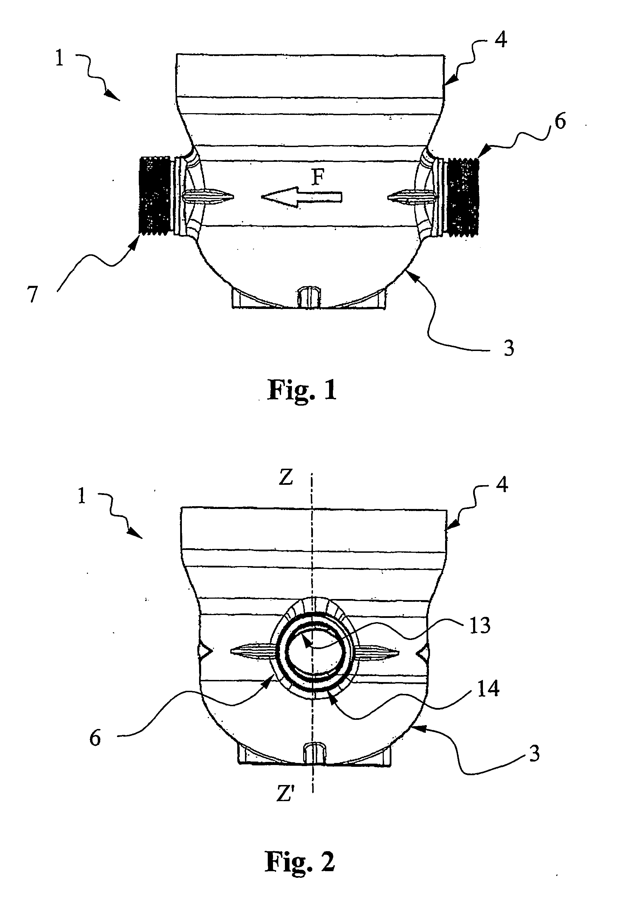

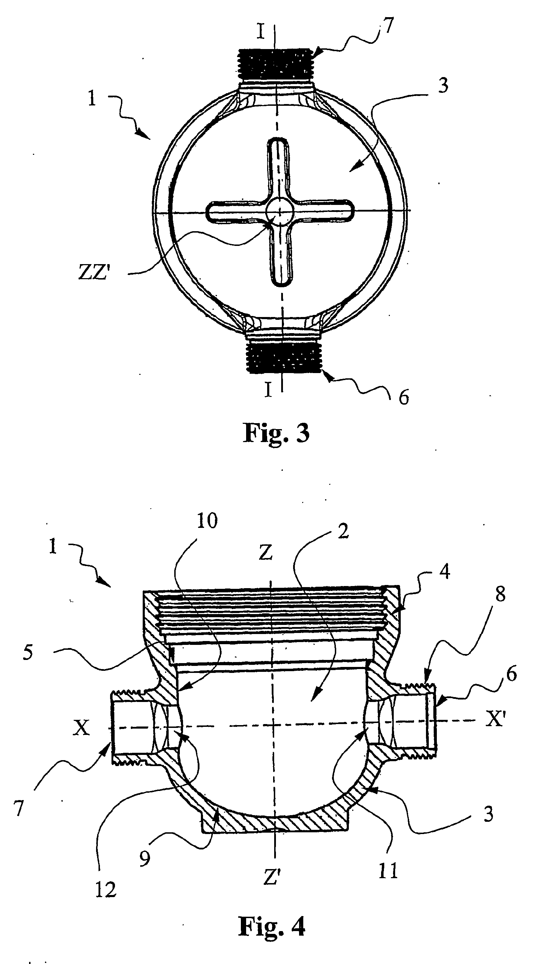

Les figures 1 à 4 montrent l'ensemble du corps de compteur selon l'invention. Le corps comporte une bâche 1 présentant une symétrie de révolution autour d'un axe ZZ'. La bâche est une pièce monobloc qui comprend une partie inférieure 3 et une partie supérieure 4. La partie inférieure 3, qui définit le logement 2 dans lequel s'insère une chambre de mesure, est limitée par un fond 9 de forme elliptique, comme il ressort de la vue en coupe de la figure 4, et une paroi latérale inférieure 10 de forme cylindrique, comme il ressort de la vue de dessous selon la figure 3. La partie supérieure 4 est limitée par une paroi latérale supérieure, également de forme cylindrique, comme il ressort de la vue de dessous selon la figure 3. Les parois latérales des deux parties sont raccordées par un épaulement 5.

Le corps de compteur comprend des tubulures d'entrée 6 et de sortie 7, de forme sensiblement cylindrique, qui comportent un filetage externe 8. Chacune des tubulures débouche dans la chambre de mesure 2 par un alésage ménagé dans la paroi latérale inférieure 10 de la chambre de mesure 2, en formant un injecteur 11 et un éjecteur 12 respectivement. L'injecteur et l'éjecteur présentent un axe commun XX' perpendiculaire à l'axe de révolution ZZ'.

La partie inférieure 3 délimite le logement de la chambre de mesure du compteur dans laquelle est montée, en fonction du type de compteur, par exemple une turbine, une hélice, ou un piston oscillant (non représentés sur les figures).

La partie supérieure 4 est destinée à recevoir un ensemble totalisateur - afficheur (non représenté) dont la fonction est de transformer la quantité de liquide ayant traversé le compteur selon la direction d'écoulement F, en un nombre lisible ou communicable à un utilisateur extérieur et correspondant au volume de liquide mesuré.

Selon une première variante de réalisation, l'alésage formant l'injecteur 11 et l'éjecteur 12 a une forme elliptique.

Selon une deuxième variante de réalisation, les tubulures d'entrée et de sortie 6 et 7 ont une forme intérieure 13 elliptique et une forme extérieure 14 sensiblement cylindrique.

Ainsi, la tubulure du fait de sa forme extérieure cylindrique et de son filetage, permet d'adapter et de visser parfaitement le corps de compteur aux conduites de forme cylindrique.

La forme elliptique de l'alésage et/ou de l'intérieur de la tubulure permet de déplacer les contraintes mécaniques hors des zones fragiles du corps de compteur, notamment en dehors des lignes de soudures.

Il résulte du choix de la forme elliptique pour le fond de la bâche, pour l'alésage et l'intérieur des tubulures, une amélioration du seuil critique de résistance mécanique de l'ensemble du corps de compteur, lequel résiste à des pressions de fluide bien plus élevées que les corps de compteur en plastique de l'art antérieur.

## Revendications

1. Corps de compteur de liquide comportant une bâche (1) en plastique présentant une symétrie de révolution autour d'un axe central de symétrie, la bâche comprenant une partie inférieure (3) limitée par un fond (9) et une paroi latérale inférieure (10), et une partie supérieure (4) de forme cylindrique limitée par une paroi latérale supérieure, ladite paroi latérale supérieure se raccordant à la paroi latérale inférieure par un épaulement (5), la partie inférieure (3) définissant un logement (2) pour une chambre de mesure, ledit corps de compteur comprend en outre des tubulures d'entrée (6) et de sortie (7) comportant un filetage externe, chacune des dites tubulures débouchant dans le logement (2) par un alésage ménagé dans la paroi latérale inférieure (10) en formant un injecteur (11) et un éjecteur (12) respectivement, ledit corps de compteur est **caractérisé en ce que** le fond (9) a une forme intérieure elliptique, concave, en coupe selon un plan contenant l'axe central de symétrie (ZZ') de la bâche.

2. Corps de compteur de liquide selon la revendication l, **caractérisé en ce que** au moins un des alésages formant l'injecteur (11) et l'éjecteur (12) a une forme elliptique.

3. Corps de compteur de liquide selon l'une des revendications précédentes, **caractérisé en ce que** chaque tubulure (6, 7) présente une forme extérieure cylindrique, et **en ce qu'**au moins une des tubulures (6, 7) présente une forme intérieure elliptique.

## Claims

1. A liquid meter body comprising a plastic reservoir (1) having a symmetry of revolution around a central axis of symmetry, the reservoir comprising a lower part (3) delimited by the base (9) and a lower side wall (10), and an upper part (4) cylindrical in shape delimited by an upper side wall, said upper side wall connecting to the lower side wall by a shoulder (5), the lower part (3) defining a housing (2) for a metering chamber, said meter body further comprising intake (6) and outlet (7) pipes comprising an outer thread, each of said pipes emerging into the housing (2) of the metering chamber through a bore provided in the lower side wall (10) forming an injector (11) and an ejector (12) respectively, said meter body is **characterized in that** the base (9) has an elliptical inner shape, concave, in cross-section along a plane containing the central axis of symmetry (ZZ') of the reservoir.

2. The liquid meter body according to claim 1, **characterized in that** at least one of the bores forming the injector (11) and the ejector (12) has an elliptical shape.

3. The liquid meter body according to one of the preceding claims, **characterized in that** each pipe (6, 7) has a cylindrical outer shape, and **in that** at least one of the pipes (6, 7) has an elliptical inner shape.

## Patentansprüche

1. Flüssigkeits-Zählerkörper, der ein Gehäuse (1) aus Kunststoff mit einer Drehsymmetrie um eine zentrale Symmetrieachse aufweist, wobei das Gehäuse einen unteren Abschnitt (3), der durch einen Boden (9) begrenzt wird und eine untere Seitenwand (10) und einen zylindrischen oberen Abschnitt (4), der durch eine obere Seitenwand begrenzt wird, umfasst, wobei sich die obere Seitenwand an die untere Seitenwand durch einen Absatz (5) anschließt, wobei der untere Abschnitt (3) eine Aufnahme (2) für eine Messkammer definiert, wobei der Zählerkörper weiterhin einen Eingangs- (6) und einen Ausgangsstutzen (7) umfasst, die ein Außengewinde aufweisen, wobei jeder der Stutzen durch eine Bohrung, die in die untere Seitenwand (10) eingearbeitet ist, in die Aufnahme (2) mündet, indem er jeweils einen Injektor (11) und einen Ejektor (12) bildet, wobei der Zählerkörper **dadurch gekennzeichnet ist, dass** der Boden (9) im Schnitt gemäß einer Ebene, die die zentrale Symmetrieachse (ZZ') des Gehäuses enthält, eine elliptische konkave Innenform hat.

2. Flüssigkeits-Zählerkörper nach Anspruch 1, **dadurch gekennzeichnet, dass** mindestens eine der Bohrungen, die den Injektor (11) und den Ejektor (12) bildet, eine elliptische Form hat.

3. Flüssigkeits-Zählerkörper nach einem der vorangehenden Ansprüche, **dadurch gekennzeichnet, dass** jeder Stutzen (6, 7) eine äußere zylindrische Form aufweist und dass mindestens einer der Stutzen (6, 7) eine innere zylindrische Form aufweist.
